**Europäisches Patentamt**

**European Patent Office**

**Office européen des brevets**

(11) Veröffentlichungsnummer: **0 218 826**
**B1**

(12) **EUROPÄISCHE PATENTSCHRIFT**

(45) Veröffentlichungstag der Patentschrift:
**18.10.89**

(21) Anmeldenummer: **86110600.3**

(22) Anmeldetag: **31.07.86**

(51) Int. Cl.⁴: **G01G 23/16**

(54) **Elektrische Waage mit Tariereinrichtung.**

(30) Priorität: **18.10.85 CH 4500/85**

(43) Veröffentlichungstag der Anmeldung:
**22.04.87 Patentblatt 87/17**

(45) Bekanntmachung des Hinweises auf die Patenterteilung:
**18.10.89 Patentblatt 89/42**

(84) Benannte Vertragsstaaten:
**DE FR GB**

(56) Entgegenhaltungen:
**EP-A- 0 063 056**
**US-A- 4 328 875**

(73) Patentinhaber: **Mettler Instrumente AG, Im Langacher,
CH-8606 Greifensee(CH)**

(72) Erfinder: **Reichmuth, Arthur, Dipl. El. Ing., Im Neuguet 6,
CH-8620 Wetzikon(CH)**
Erfinder: **Wachter, Hanspeter, Dipl. El. Ing.,
Bettlestrasse 14, CH-8600 Dübendorf(CH)**

ACTORUM AG

## Beschreibung

Die Erfindung betrifft eine elektrische Waage mit zwischen den die Wägesignale liefernden Datenausgang der Waage und deren Anzeigeeinrichtung eingeschalteter Tariereinrichtung, die einen Tarierschalter zur Auslösung einer Tarierung, einen Taraspeicher zur Aufnahme des einen Tarawert darstellenden Wägesignals und einen Rechner aufweist, der das im Taraspeicher gespeicherte Wägesignal von nachfolgenden Wägesignalen wertmässig laufend subtrahiert und das Differenzsignal der Anzeigeeinrichtung zuführt.

Elektrische Waagen mit Tariereinrichtung dieser Art sind bekannt (DE-OS 2 210 446).

Bekanntlich wird die Tariereinrichtung nicht nur zur Berücksichtigung der Tara (Gewicht der Verpackung) zu Beginn der Wägung benutzt. Vielmehr kann durch wiederholtes Betätigen des Tarierschalters auch eine Einwägung mehrerer Komponenten in ein Behältnis unter jeweiliger Anzeige der Nettozugabe vorgenommen werden.

In der Praxis hat es sich nun gezeigt, dass bei der Komponenten-Einwägung mitunter Fehlmanipulationen vorkommen, indem z.B. der Tarierschalter vor Erreichen des Sollgewichtes einer Komponente irrtümlich betätigt wird. Der vorgängige Tarawert wird dabei im Taraspeicher gelöscht und durch den neuen Tarawert ersetzt. Damit entfällt die Möglichkeit, das Gewicht der zuletzt eingewogenen Komponente auf das Sollgewicht zu ergänzen. Ein Wägegut mit nachträglich nicht mehr voneinander trennbaren Komponenten ist in diesem Zustand nicht weiter verwendbar.

Auch bei einfachen Wägungen kann ein unbeabsichtigtes Betätigen des Tarierschalters nachteilig sein, wenn der Inhalt eines Behältnisses aus diesem zuerst entfernt werden muss, um den Tarawert wieder neu zu bestimmen. Die Entleerung kann z.B. dann mühevoll sein, wenn es sich um ein sehr schweres oder sonst nicht leicht zu handhabendes Behältnis handelt oder wenn der Inhalt, z.B. eine zähe Flüssigkeit, nur mit grossem Aufwand restlos aus dem Behältnis zu entfernen ist.

Der Erfindung liegt die Aufgabe zugrunde, die Tariereinrichtung einer elektrischen Waage derart zu verbessern, dass sie die Möglichkeit bietet, eine irrtümlich vorgenommene Tarierung rückgängig zu machen.

Die Lösung dieser Aufgabe besteht darin, dass erfindungsgemäss die Tariereinrichtung wenigstens einen an den Taraspeicher angeschlossenen Zusatzspeicher und einen Löschschalter zur Rückgängigmachung einer vorangegangenen Tarierung aufweist, wobei die Schaltungsanordnung so getroffen ist, dass bei Betätigung des Tarierschalters das im Taraspeicher gespeicherte Wägesignal vor der Aufnahme des momentanen Wägesignals in den Zusatzspeicher und bei Betätigung des Löschschalters der Inhalt des Zusatzspeichers in den Taraspeicher übertragen wird.

Durch den Zusatzspeicher wird erreicht, dass bei Betätigung des Tarierschalters der im Taraspeicher vorgängig gespeicherte Tarawert nicht verloren geht und bei Bedarf wieder in den Taraspeicher zurückgeholt werden kann. Für den Fall, dass der Zugriff zu mehreren vorgängigen Tarawerten erhalten bleiben soll, können auch mehrere Zusatzspeicher vorgesehen sein, in denen diese Tarawerte z.B. der Reihe nach abgespeichert und in umgekehrter Reihenfolge dem Taraspeicher wieder zugeführt werden können.

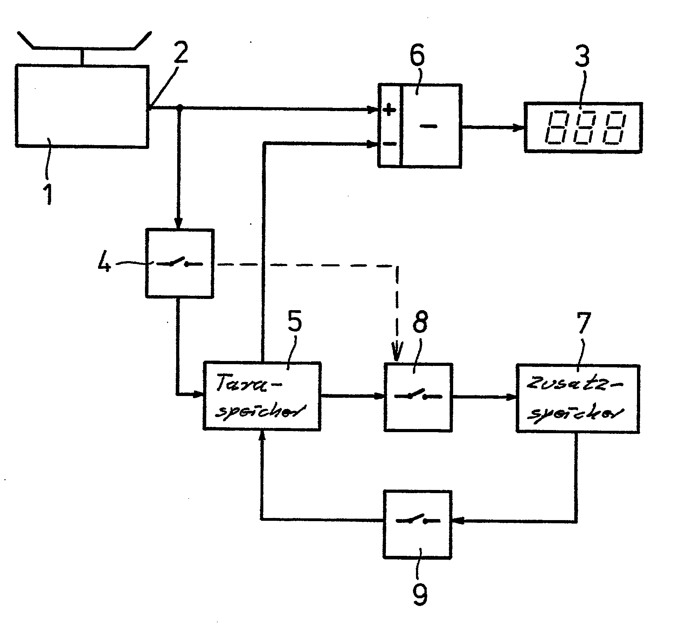

Nachstehend wird anhand der schematischen Darstellung in der Zeichnung ein Ausführungsbeispiel der Erfindung näher erläutert.

Die elektrische Waage 1 hat einen Datenausgang 2, an dem die Wägeresultate als elektrische, im vorliegenen Beispiel digitale Wägesignale anfallen. Dazu gehört eine digitale Anzeigeeinrichtung 3. Die zwischen den Datenausgang 2 und die Anzeigeeinrichtung 3 eingeschaltete Tariereinrichtung umfasst einen Tarierschalter 4 zur Auslösung einer Tarierung, einen Taraspeicher 5 zur Aufnahme des einen Tarawert darstellenden Wägesignals und einen Rechner 6, der das im Taraspeicher 5 gespeicherte Wägesignal von nachfolgenden Wägesignalen wertmässig laufend subtrahiert und das Differenzsignal, welches das jeweilige Nettogewicht darstellt, der Anzeigeeinrichtung 3 zuführt.

Bei Betätigung des Taraschalters 4 gelangt das momentane Wägesignal in den Taraspeicher 5, wo es für den Rechner 6 als Tarawert bereitsteht. Dasselbe momentane Wägesignal wird dem Rechner 6 auch direkt zugeführt, so dass das Differenzsignal den Wert Null hat. Jede Gewichtsveränderung auf der Waage hat danach zur Folge, dass der im Taraspeicher 5 gespeicherte Tarawert von den nachfolgenden Wägeresultaten laufend subtrahiert wird und die Anzeigeeinrichtung 3 den jeweiligen Nettowert anzeigt. Der eingegebene Tarawert bleibt im Taraspeicher 5 solange erhalten, bis der Taraspeicher 4 erneut betätigt wird, wodurch der im Taraspeicher 5 bisher gespei cherte Tarawert durch das neue momentane Wägesignal ersetzt wird und die Anzeigeeinrichtung 3 wiederum den Wert Null anzeigt.

Der ersetzte Tarawert ging bei den bisherigen Tariereinrichtungen verloren. Die erfindungsgemässe Tariereinrichtungen besitzt demgegenüber einen Zusatzspeicher 7, der den im Taraspeicher 5 ersetzten Tarawert aufnimmt. Mit dem Taraschalter 4 ist ein Schalter 8 für die Verbindung des Taraspeichers 5 mit dem Zusatzspeicher 7 derart gekoppelt, dass er jeweils vor dem Taraschalter 4 zur Wirkung kommt. Es wird also bei jeder Betätigung des Tarierschalters 4 das jeweils im Taraspeicher 5 gespeicherteWägesignal auf den Zusatzspeicher 7 übertragen, bevor der neue Tarawert in den Taraspeicher 5 aufgenommen wird. Ein Löschschalter 9 dient nun dazu, eine vorangegangene Tarierung rückgängig zu machen, indem bei jeder Betätigung des Löschschalters 9 das jeweils im Zusatzspeicher 7 gespeicherte Wägesignal in den Taraspeicher 5 zurückversetzt wird, so dass das vor der letzten Tarierung angezeigte Nettogewicht wieder an der Anzeigeeinrichtung 3 erscheint. Auf diese Weise werden die Nachteile, welche bisher bei irrtümlicher Tarierung auftreten konnten, vermieden.

In der praktischen Ausführung handelt es sich bei dem Taraspeicher 5 und dem Zusatzspeicher 7 vornehmlich um verschiedene Speicherplätze einer einzigen Speichereinrichtung.

## Patentansprüche

Elektrische Waage mit zwischen den die Wägesignale liefernden Datenausgang (2) der Waage (1) und deren Anzeigeeinrichtung (3) eingeschalteter Tariereinrichtung, die einen Tarierschalter (4) zur Auslösung einer Tarierung, einen Taraspeicher (5) zur Aufnahme des einen Tarawert darstellenden Wägesignals und einen Rechner (6) aufweist, der das im Taraspeicher (5) gespeicherte Wägesignal von nachfolgenden Wägesignalen wertmässig laufend subtrahiert und das Differenzsignal der Anzeigeeinrichtung (3) zuführt, dadurch gekennzeichnet, dass die Tariereinrichtung wenigstens einen an den Taraspeicher (5) angeschlossenen Zusatzspeicher (7) und einen Löschschalter (8) zur Rückgängigmachung einer vorangegangenen Tarierung aufweist, wobei die Schaltungsanordnung so getroffen ist, dass bei Betätigung des Tarierschalters (4) das im Taraspeicher (5) gespeicherte Wägesignal vor der Aufnahme des momentanen Wägesingals in den Zusatzspeicher (7) und bei Betätigung des Löschschalters (8) der Inhalt des Zusatzspeichers (7) in den Taraspeicher (5) übertragen wird.

## Claims

1. An electrical weighing machine comprising a taring means which is connected between the data output (2) of the weighing machine (1), which supplies the weighing signals, and the display means (3) of the weighing machine, and which has tare switch (4) for initiating a taring operation, a tare memory (5) for receiving the weighing signal representing a tare value, and a calculating means (6) which continuously subtracts the weighing signal stored in the tare memory (5) from subsequent weighing signals, in respect of values thereof, and feeds the difference signal to the display means (3), characterised in that the taring means comprises at least one additional memory (7) connected to the tare memory (5) and an erase switch (8) for cancelling a preceding taring operation, the circuit arrangement being such that upon actuation of the tare switch (4) the weighing signal stored in the tare memory (5) is transferred into the additional memory (7) prior to receiving the instantaneous weighing signal and upon actuation of the erase switch (8) the content of the additional memory (7) is transferred into the tare memory (5).

## Revendications

Balance électrique pourvue d'un dispositif de tarage disposé entre la borne de sortie (2) des signaux donnant les valeurs de pesée de la balance (1) et le dispositif d'affichage (3) de celle-ci, le dispositif de tarage comportant une touche de tarage (4) permettant de déclencher une opération de tarage, une mémoire (5) de la tare permettant d'enregistrer un signal de pesée représentant la valeur de la tare, ainsi qu'un calculateur (6) destiné à soustraire systématiquement la valeur du signal de pesée, enregistré dans la mémoire (5) de la tare, des signaux suivants de pesée, et à transmettre le signal différentiel correspondant au dispositif d'affichage (3), caractérisée par le fait que le dispositif de tarage est muni d'au moins une mémoire auxiliaire (7) reliée à la mémoire (5) de la tare, et d'une touche (8) de correction permettant d'effacer une opération de tarage précédente, le branchement du système étant réalisé de telle façon qu'en cas d'action sur la touche (4) de tarage, l'on transmette le signal de pesée enregistré dans la mémoire (5) de la tare à la mémoire auxiliaire (7), avant d'enregistrer le signal de pesée momentané, et qu'en cas d'action sur la touche (8) de correction, l'on transmette le contenu de la mémoire auxiliaire (7) à la mémoire (5) de la tare.